# EUROPÄISCHE PATENTSCHRIFT

(11) **EP 2 136 229 B1**
(45) Veröffentlichungstag und Bekanntmachung des Hinweises auf die Patenterteilung: **11.05.2011**
(21) Anmeldenummer: 09162918.8
(22) Anmeldetag: 17.06.2009
(51) Int. Cl.: G02B 7/00, G02B 7/02, G03F 7/20

(54) **Lateral verstellbare optische Fassung mit Kniehebelmanipulatoreinheiten**
Laterally adjustable optical mount with bent lever manipulator units
Monture d'element optique deplacable en translation au moyen de liaisons pivots semblables à celles d'un genou

(30) Priorität: 19.06.2008 DE 102008029161
(43) Veröffentlichungstag der Anmeldung: 23.12.2009
(73) Patentinhaber: JENOPTIK Optical Systems GmbH, 07745 Jena (DE)
(72) Erfinder: Reichmann, Lutz, 07743 Jena (DE); Bornschein, Marco, 07743 Jena (DE)
(74) Vertreter: Schaller, Renate

(56) Entgegenhaltungen:
- EP-A- 1 020 751
- EP-A- 1 209 500
- EP-A- 1 577 693
- WO-A-2006/119970
- DE-A1-102007 030 579

## Beschreibung

Die Erfindung betrifft eine monolithische optische Fassung, insbesondere eine Linsenfassung, die durch Schlitze in einen feststehenden äußeren Fassungsring und einen lateral verstellbaren inneren Fassungsring unterteilt ist. Eine gattungsgemäße Fassung ist aus der EP 1 577 693 A2 bekannt.

Aus der DE 199 01 295 A1 ist eine optische Abbildungsvorrichtung bekannt, bei der eine Außenfassung und ein hierzu verstellbarer Innenring vorzugsweise aus einem Stück, also monolithisch gefertigt sind. Eine zur weggesteuerten Verschiebung des im Innenring gefassten optischen Elementes in einer Richtung senkrecht zur optischen Achse dienende Manipulatoreinrichtung besteht zwischen dem Innenring und der Außenfassung aus einem System von Umfangsschlitzen mit dazwischen liegenden Verbindungsgliedern, einem Drehgelenk und wenigstens einem Verstellgelenk mit einem Verstellglied.

Der Nachteil dieser Lösung besteht insbesondere darin, dass diese durch die Vielzahl unterschiedlich ausgebildeter Manipulatoreinheiten, hier Manipulatorelemente genannt, einen komplizierten und unsymmetrischen Aufbau besitzt, der für symmetrische Systeme ungeeignet ist oder zu Systeminstabilitäten führt. Insbesondere erhöhen die in Richtung der optischen Achse versteifend wirkenden, kinematisch jedoch überflüssigen Verbindungsglieder den Fertigungsaufwand, erfordern in Abhängigkeit von der Anzahl zusätzliche Stellkräfte und bewirken, dass sich Deformationen stärker auf den inneren Teil auswirken. Außerdem benötigen die Verstellgelenke eine zusätzliche Blattfeder und müssen zur Gewährleistung der beabsichtigten Justierung in zwei zueinander entgegengesetzten Richtungen verstellt werden, so dass Vorspannelemente für beide Richtungen erforderlich sind.

Aus der WO 2005/101131 A1 ist eine Linsenfassung bekannt, hier Aufnahmebaugruppe zur Positionierung eines optischen Elementes genannt, bestehend aus einem ersten Rahmen und drei identischen Manipulatoreinheiten, hier Halteeinheiten genannt, die gleichwinklig am Umfang des ersten Rahmens verteilt einen zweiten Rahmen, der eine Linse trägt, halten. Bei den Halteeinheiten handelt es sich um zusätzliche Bauteile, was unter anderem zu einem höheren Fertigungs- und Montageaufwand führt. Es handelt sich demnach nicht um eine monolithische Linsenfassung.

In der DE 100 51 706 A1 ist ebenfalls eine Fassung offenbart, die durch mehrere Schlitze in eine Innenfassung und eine Außenfassung geteilt ist, die zwischen den Schlitzen verbunden bleiben, wobei diese Verbindungen im Sinne der Erfindung Manipulatoreinheiten darstellen. Die Schlitze sind so gelegt, dass über die Betätigung der Verbindungen durch angreifende Manipulatoren die Innenfassung und damit die gefasste Linse axial verschiebbar ist und somit keine radial verschiebbare Fassung vergleichbar mit der Erfindung darstellt.

Auch aus der EP 1 577 693 A2 ist eine aus einem Stück und damit monolithisch gefertigte Linsenfassung bekannt. In einer bevorzugten Ausführung ist ein Innenring über drei Manipulatoreinheiten, hier Verstellgelenke genannt, mit jeweils zwei Gelenkarmen und einem dazwischen liegenden Verstellteil mit einer Außenfassung verbunden. Zur lateralen Verstellung des Innenringes und damit des optischen Elementes greifen Aktoren an den Verstellgelenken an.

Man kann die beiden Gelenkarme und das dazwischen liegende Verstellteil auch als zwei parallel geschaltete Kniehebel verstehen, jeweils aus zwei über ein Gelenk verbundene Hebel (Glieder) gebildet, wobei jeweils einer der freien Hebelenden über ein Gelenk mit der Linsenfassung verbunden ist, und die jeweils anderen freien Enden über das Verstellteil starr miteinander verbunden sind. Die beiden die Linsenfassung mit den Manipulatoreinheiten verbindenden Gelenke sind radial hintereinander angeordnet.

Durch die beiden in radialer Richtung in einer Ebene hintereinander angeordneten Kniehebel wird für die Manipulatoreinheiten relativ viel Platz beansprucht. Gegenüber der vorgenannten DE 199 01 295 A1 zeichnet sich die hier aufgezeigte Lösung durch eine höhere Temperaturstabilität aus.

Wie in der EP 1 577 693 A2 ausgeführt, ergibt sich bei der Erwärmung des optischen Elementes, z. B. einer Linse, das Problem, dass die Wärme über die nur wenigen und schmalen Verbindungsstellen zwischen dem Innenring und der Außenfassung nur schlecht abgeleitet werden kann. Die sich dadurch einstellenden Temperaturunterschiede wirken sich nachteilig auf die Abbildungsqualität aus, da insbesondere eine Längenänderung der in eine gleiche Richtung ausgedehnten Gelenkarme aufgrund von Temperaturänderungen zu einer Verschiebung des Innenringes in dieser Richtung führt, was Aberrationen und Koma zur Folge hat. Dieses Problem wird mit einer Linsenfassung gemäß der EP 1 577 693 A2 im Wesentlichen dadurch behoben, dass die Gelenkarme in tangentiale Richtung um 120° zueinander versetzt an der äußeren Umfangsfläche des Innenringes und an der inneren Umfangsfläche der Außenfassung im Uhrzeigersinn vom Innenring weggerichtet angreifen. Eine Längenänderung der Gelenkarme wird hier in eine einheitliche Verdrehrichtung umgesetzt. Verdrehungen dieser Art führen nicht zu Aberrationen, insbesondere nicht bei einer Linse als optisches Element.

Eine Linsenfassung gemäß der EP 1 577 693 A2 soll auch den Vorteil haben, dass durch eine Verkürzung der Gelenkarme eine höhere Lateralsteifigkeit der Innenringanbindung erreichbar ist und damit die Linsenfassung mit der gefassten Linse gegen Eigenschwingungen steifer ist. Eine höhere Lateralsteifigkeit durch Verkürzung der Gelenkarme geht jedoch zu Lasten der Feinfühligkeit der Verstellung, in die nicht nur die Gliedlänge, sondern auch die Durchbiegung der Gelenkarme eingeht.

Die Länge der Gelenkarme wird hierbei jedoch weiterhin durch die zulässige Werkstoffbelastung vorgegeben. Das heißt, ist bei vorgegebenem Stellweg und vorgegebener Feinfühligkeit die zulässige Werkstoffbelastung erreicht, so ist eine weitere Verkürzung der Gelenke zur Erhöhung der Steifigkeit bzw. Eigenfrequenz nicht möglich. Folglich sind immer zwei relativ dünne und im Verhältnis zum Querschnitt lange Gelenkarme erforderlich, um die Funktion als Verstelleinheit bzw. Gelenk zu bewerkstelligen, was die erreichbare laterale und axiale Steifigkeit grundsätzlich begrenzt.

In der DE 10 2007 030 579 A1 ist eine erste Ausführung für eine lateral verstellbare Linsenfassung beschrieben, wie sie im Wesentlichen einer solchen gemäß der EP 1 577 693 A2 entspricht, das heißt drei um 120° zueinander versetzt angeordnete Manipulatoreinheiten sind jeweils als ein Glied ausgebildet, das an seinem festen Ende in zwei tangential ausgerichtete Gelenkarme, hier Stege genannt, übergeht, die mit dem inneren Fassungsteil bzw. dem äußeren Fassungsteil verbunden sind.

In einer zweiten Ausführungsform sind die das Glied mit dem inneren bzw. äußeren Fassungsteil verbindenden Stege radial ausgerichtet, wodurch eine höhere Lateralsteifigkeit erzielt wird.

Ein Auslenken des Hebels, indem über einen Manipulator am freien Hebelende eine radial wirkende Kraft eingeleitet wird, führt jedoch bei den radialen Stegen im Vergleich zu den tangentialen Stegen zu weitaus höheren Zugkräften in den Stegen. Das Entstehen von unerwünschten Spannungen im Innenring ist hierbei unvermeidbar.

In beiden Ausführungen sind die Manipulatoreinheiten einfache Hebelgetriebe, deren Übersetzung über die Länge des Gliedes und die Durchbiegung der Stege in radialer Richtung bestimmt ist. Um eine hohe Feinfühligkeit bei entsprechenden Stellwegen zu erhalten, werden die Stege bzw. Gelenkarme lang ausgebildet, was zur Verwindung in axialer Richtung führen kann.

Der Erfindung liegt die Aufgabe zugrunde, eine monolithische Fassung zu finden, die eine sehr feinfühlige Justierung eines im inneren Fassungsring gefassten optischen Elementes, insbesondere einer Linse, ermöglicht, wobei sie eine hohe laterale und axiale Steifigkeit aufweisen soll und der innere Fassungsring spannungsarm sein soll.

Diese Aufgabe wird durch eine optische Fassung mit den Merkmalen des Anspruches 1 gelöst.

Vorteilhafte Ausgestaltungen und Weiterbildungen sind Gegenstand der Unteransprüche.

Anhand der Zeichnung wird die Erfindung im Folgenden beispielhaft näher erläutert.

Es zeigen:
- Fig. 1: Draufsicht auf eine erfindungsgemäße Fassung mit einer ersten Ausführung einer Kniehebelmanipulatoreinheit 3.1
- Fig. 2a: erste Ausführung einer Kniehebelmanipulatoreinheit 3.1 im Schnittbild
- Fig. 2b: Getriebeschema der ersten Ausführung einer Kniehebelmanipulatoreinheit 3.1
- Fig. 3a: zweite Ausführung einer Kniehebelmanipulatoreinheit 3.2 im Schnittbild
- Fig. 3b: Getriebeschema der zweiten Ausführung einer Kniehebelmanipulatoreinheit 3.2
- Fig. 4a: dritte Ausführung einer Kniehebelmanipulatoreinheit 3.3 im Schnittbild
- Fig. 4b: Getriebeschema der dritten Ausführung einer Kniehebelmanipulatoreinheit 3.3

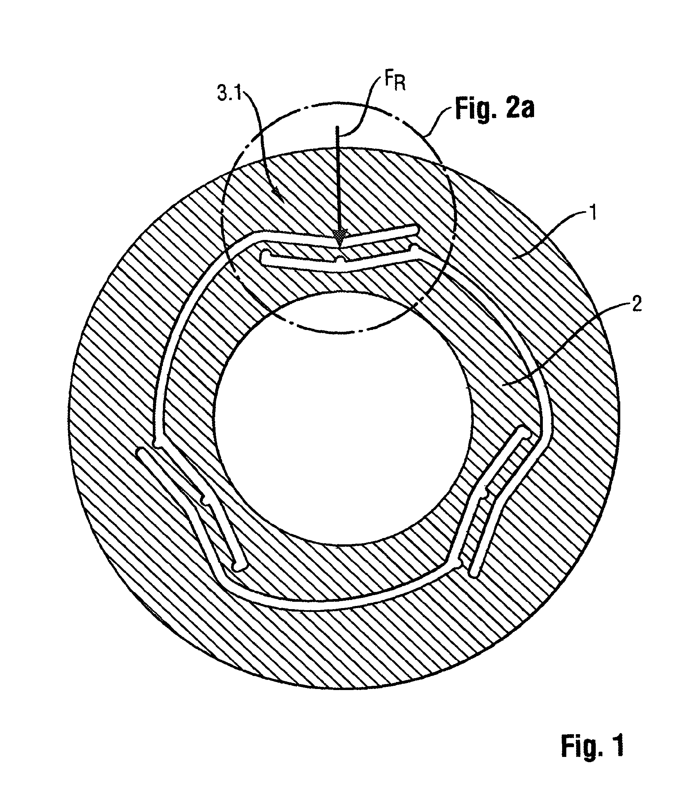

Eine erfindungsgemäße monolithische optische Fassung ist als Linsenfassung in Fig. 1 dargestellt. Sie ist gleich einer aus dem Stand der Technik gemäß der EP 1 577 693 A2 bekannten Fassung aus einem rotationssymmetrischen Körper gefertigt und durch mehrere parallel zu dessen Symmetrieachse den Körper durchdringende Schlitze in einen feststehenden äußeren Fassungsring 1 mit einer Fassungsachse A, gleich der Symmetrieachse, und einen hierzu lateral verstellbaren inneren Fassungsring 2 unterteilt.

Durch die Schlitze sind drei jeweils um 120° zueinander versetzt angeordnete Manipulatoreinheiten gebildet, über die bei bestimmungsgemäßer Einleitung einer radial angreifenden Kraft F_{R}, die am Kraftangriffspunkt einen Verstellweg bewirkt, der Mittelpunkt des inneren Fassungsringes 2 in einer Ebene senkrecht zur Fassungsachse A, die im Falle einer Linsenfassung im spannungsfreien Zustand mit der optischen Achse der Linse zusammenfällt, zum Mittelpunkt des äußeren Fassungsringes 1 lateral verschoben werden kann.

In der speziellen Gestaltung der Manipulatoreinheiten, die jeweils als ein Kniehebelgetriebe ausgebildet sind, nachfolgend Kniehebelmanipulatoreinheiten 3 genannt, unterscheidet sich eine erfindungsgemäße Fassung von solchen aus dem Stand der Technik bekannten.

In Fig. 1 ist eine Linsenfassung mit einer ersten Ausführung einer Kniehebelmanipulatoreinheit 3.1 gezeigt.

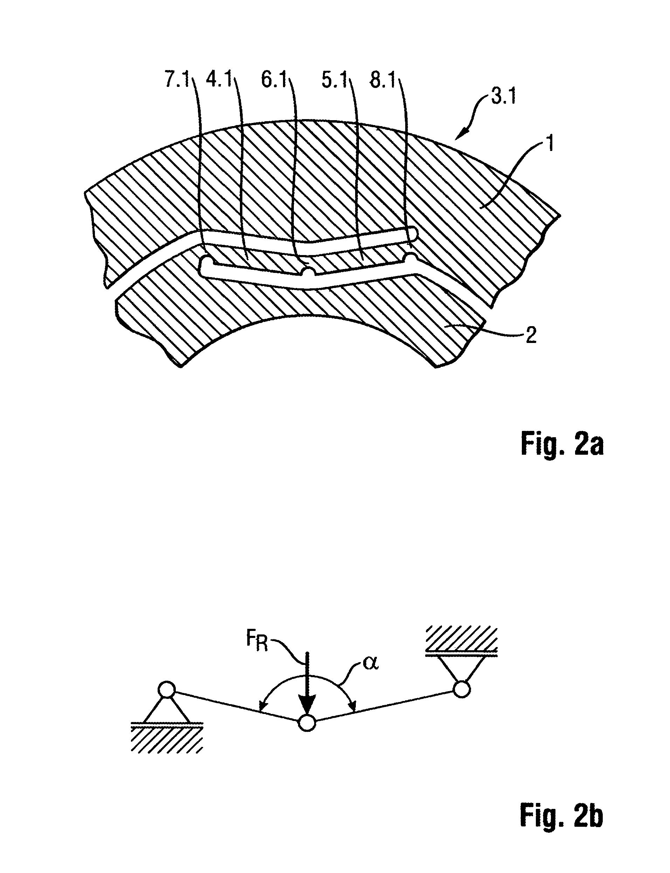

Die Fig. 2a, 3a und 4a zeigen jeweils verschiedene Ausführungen von Kniehebelmanipulatoreinheiten 3.1, 3.2, 3.3, die zur Verdeutlichung der jeweiligen Schlitzführungen als Schnittbild dargestellt sind.

Die Fig. 2b, 3b und 4b zeigen die jeweils zugehörigen Getriebeschemen.

Eine erste Ausführung einer Kniehebelmanipulatoreinheit 3.1, gezeigt in den Fig. 1 sowie 2a und 2b, besteht aus einem Kniehebel mit einem ersten Glied 4.1, das über ein Kniehebelfestkörpergelenk 6.1 mit einem zweiten Glied 5.1 verbunden ist.

Das erste Glied 4.1 und das zweite Glied 5.1 schließen innerhalb des Verstellungsbereiches des Kniehebels in jeder Stellung einen sich mit dem Verstellweg ändernden Kniewinkel α von kleiner 180° ein, wobei als Kniewinkel α der jeweils kleinere Winkel zwischen den ersten Gliedern 4.1 und den zweiten Gliedern 5.1 gemeint ist.

Das erste Glied 4.1 ist anderen Endes über ein erstes Festkörpergelenk 7.1 mit dem inneren Fassungsring 2 verbunden.

Das zweite Glied 5.1 steht anderen Endes über ein zweites Festkörpergelenk 8.1 mit dem äußeren Fassungsring 1 in Verbindung.

In der gezeigten Ausführung sind die Längen der beiden Glieder 4.1, 5.1 des Kniehebels beispielsweise gleichlang dimensioniert.

Die Manipulation dieser ersten Ausführung für eine Kniehebelmanipulatoreinheit 3.1 erfolgt durch nicht dargestellte Aktoren, die auf das Kniehebelfestkörpergelenk 6.1 gerichtet sind.

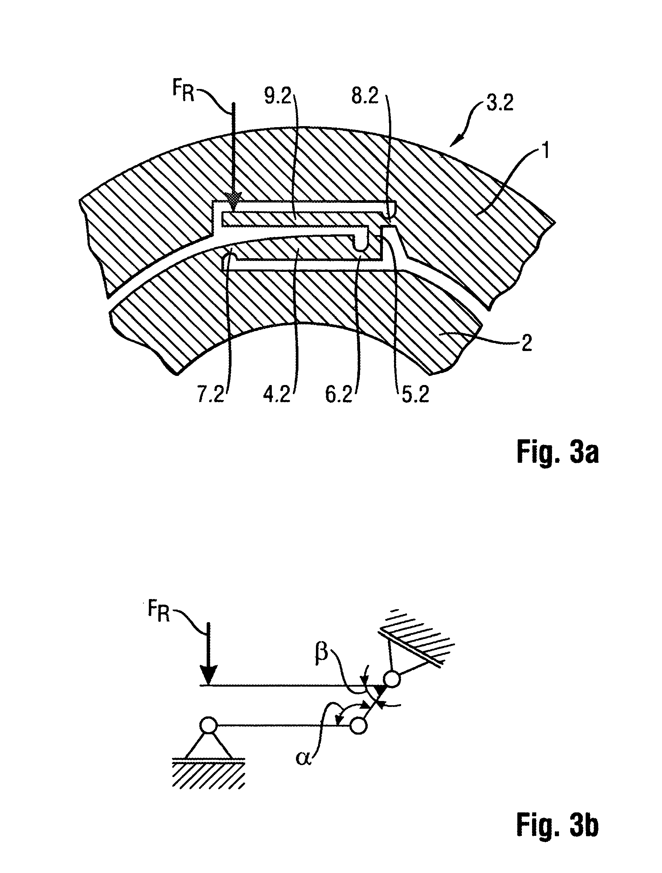

Eine zweite Ausführung einer Kniehebelmanipulatoreinheit 3.2, gezeigt in den Fig. 3a und 3b, unterscheidet sich zur ersten Ausführung 3.1 getriebetechnisch durch einen zusätzlichen Hebel 9.2, der starr mit einem zweiten Glied 5.2 verbunden ist. Der Hebel 9.2 und das zweite Glied 5.2 des Kniehebels schließen einen starren Winkel β miteinander ein. Zwei Festkörpergelenke· 7.2, 8.2 und ein Kniehebelfestkörpergelenk 6.2 sind in gleicher Weise ausgebildet wie die Festkörpergelenke 7.1, 8.1 und das Kniehebelfestkörpergelenk 6.1 der ersten Ausführungsform einer Kniehebelmanipulatoreinheit 3.1. Ein hier nicht dargestellter Aktor greift an dem freien Ende des Hebels 9.2 an.

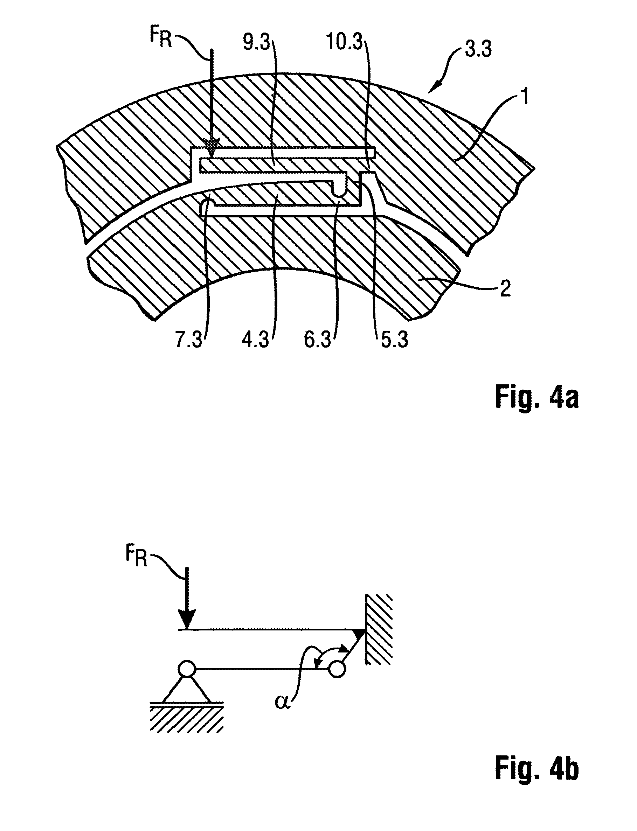

In einer dritten Ausführung einer Kniehebelmanipulatoreinheit 3.3, gezeigt in den Fig. 4a und 4b, ist im Unterschied zur zweiten Ausführung 3.2 die Verbindung mit dem äußeren Fassungsring 1 anders gestaltet als bei den bisher beschriebenen Ausführungen.

Bisher ist diese Verbindung als zweites Festkörpergelenk 8 ausgeführt, das heißt die Verbindungsstelle ist gegenüber den angrenzenden Materialbereichen verjüngt. Die Verjüngung kann gebildet werden, indem einer oder beide der angrenzenden Schlitze lokal begrenzt breiter ausgeführt werden.

In der dritten Ausführung einer Kniehebelmanipulatoreinheit 3.3 ist die Verbindungsstelle mit dem äußeren Fassungsring 1 nicht verjüngt und stellt damit getriebetechnisch kein Festkörpergelenk dar, sondern eine Festeinspannung 10.3 für den mit einem zweiten Glied 5.3 starr verbundenen zusätzlichen Hebel 9.3.

Ein in der dritten Ausführung einer Kniehebelmanipulatoreinheit 3.3 vorhandenes erstes Festkörpergelenk 7.3, ein Kniehebelfestkörpergelenk 6.3 und ein erstes Glied 4.3 sind in gleicher Weise ausgebildet wie das erste Festkörpergelenk 7.2, das Kniehebelfestkörpergelenk 6.2 und das erste Glied 4.2 der zweiten Ausführung einer Kniehebelmanipulatoreinheit 3.2.

Wie aus den Zeichnungen eindeutig ersichtlich ist, haben alle Ausführungsbeispiele gemeinsam, dass das Kniehebelfestkörpergelenk 6 in tangentialer Richtung der Fassung zwischen den beiden Verbindungen des Kniehebels mit der Fassung angeordnet ist, was gegeben ist, wenn die beiden Glieder 4 und 5 einen Winkel größer 90° miteinander einschließen.

Die Wirkungsweise der drei erläuterten Ausführungen für Kniehebelmanipulatoreinheiten 3 ist insofern gleich, dass die jeweils betätigte Kniehebelmanipulatoreinheit 3 als Getriebe wirkt, während die anderen beiden eine Lagerung bilden.

Denkt man sich jeweils an einem ersten Festkörpergelenk 7 der Lagerungen eine am inneren Fassungsring 2 anliegende Tangente, so befindet sich der Pol der Lagerungen im Schnittpunkt beider Tangenten. Durch Betätigung der als Getriebe wirkenden Kniehebelmanipulatoreinheit 3 wird eine Bewegung des Mittelpunktes des inneren Fassungsringes 2 um den Pol eingeleitet. Wegen des sehr großen Abstandes des Pols von der jeweils betätigten Kniehebelmanipulatoreinheit 3 und der vergleichsweise sehr kleinen Verschiebung des Mittelpunktes des inneren Fassungsringes 2 kann von einer annährend linearen Bewegung und damit Verschiebung ausgegangen werden.

Das Übersetzungsverhältnis eines bewirkten Verstellweges am Angriffspunkt einer radialen Kraft F_{R} zum Verschiebeweg des Mittelpunktes des inneren Fassungsringes 2 mit einer erfindungsgemäßen Kniehebelmanipulatoreinheit 3 wird bestimmt durch:
➢ die Durchbiegung des Hebels 9
➢ den Kniewinkel α
➢ die Längen der ersten Glieder 4 und der zweiten Glieder 5 sowie deren Längenverhältnis zueinander und
➢ das Längenverhältnis zwischen den zweiten Gliedern 5 und dem Hebel 9.

In Verbindung mit den beiden als Lager wirkenden Kniehebelmanipulatoreinheiten 3 wird das Übersetzungsverhältnis auch bestimmt durch:
➢ das Längenverhältnis zwischen der Entfernung des ersten Festkörpergelenkes 7 der als Lager wirkenden Kniehebelmanipulatoreinheiten 3 zum Pol und der Entfernung des ersten Festkörpergelenkes 7 der als Getriebe wirkenden Kniehebelmanipulatoreinheiten 3 zum Mittelpunkt des inneren Fassungsringes 2.

Zur Betätigung der ersten Ausführung einer Kniehebelmanipulatoreinheit 3.1 wird eine einen Verstellweg bewirkende radiale Kraft F_{R} am Kniehebelfestkörpergelenk 6.1 eingeleitet.

Bei den beiden anderen aufgezeigten Ausführungen einer Kniehebelmanipulatoreinheit 3.2, 3.3 wird der Verstellweg bewirkt, indem eine radiale Kraft F_{R} am freien Ende des Hebels 9 angreift.

Mit der Verschiebung des inneren Fassungsringes 2 proportional zum Verstellweg an einer Kniehebelmanipulatoreinheit 3 beschreibt dessen Mittelpunkt eine Bahnkurve mit einer sich ändernden x- und y-Auslenkung in einem gedachten kartesischen Koordinatensystem, dessen Koordinatenursprung in den Mittelpunkt des äußeren Fassungsringes 1 gelegt ist.

Durch eine Überlagerung der Bewegungsbahnen, bewirkt über alle drei Kniehebelmanipulatoreinheiten 3, ist jede beliebige Mittelpunktslage des inneren Fassungsringes 2 zum Mittelpunkt des äußeren Fassungsringes 1 im Rahmen des vorgesehenen Verschiebeweges einstellbar. Die Verstell- und die Verschiebewege sind typischerweise im µm-Bereich und die Übersetzungsverhältnisse insbesondere im Bereich von 1:10 bis 1:20, wobei durch einen Kniewinkel α von annährend 180° auch extrem große Übersetzungsverhältnisse erreichbar sind.

Der Vorteil von Manipulatoreinheiten, gebildet aus einem Kniehebelgetriebe, besteht insbesondere darin, dass das Übersetzungsverhältnis durch die Wahl des Kniewinkels α in weiten Grenzen einstellbar ist, und zum anderen, dass diese Getriebe im Vergleich zu den Hebelgetrieben aus dem Stand der Technik eine erheblich höhere Längs- und Quersteifigkeit relativ zur Achse des inneren Fassungsringes 2 bzw. des äußeren Fassungsringes 1 aufweisen. Das wird dadurch erreicht, dass die Materialschwächungen auf die Festkörpergelenke reduziert sind, während die als Verbindung zwischen dem inneren Fassungsring 2 und dem äußeren Fassungsring 1 wirkenden, steifigkeitsbestimmenden Glieder vergleichsweise dickwandig ausgeführt sind.

Die dritte Ausführung einer Kniehebelmanipulatoreinheit 3.3 ist bezüglich der erreichbaren Steifigkeit besonders vorteilhaft, da die Verbindung zum äußeren Fassungsring 1 keine Materialschwächung aufweist. Der innere Fassungsring 2 wird über den gesamten Verstellbereich nahezu spannungsfrei gehalten, da die Spannungen auf die unmittelbare Umgebung der Festkörpergelenke 7, 8 beschränkt bleiben. Damit ist der innere Fassungsring 2 von den zur Manipulation erforderlichen Kräften vollständig entkoppelt.

Die Auswahl der Längen und der Dicken der Hebel und Glieder sowie des Kniewinkels α im spannungsfreien Zustand erfolgt in Abhängigkeit von den Abmaßen der Linsenfassung und deren Materialkonstanten, die für eine Durchbiegung bestimmend sind, um ein gewünschtes Übersetzungsverhältnis und damit eine gewünschte Feinfühligkeit für die Verschiebung einer im inneren Fassungsring 2 gefassten Linse zu erhalten.

Ebenso ist die Stärke der Materialschwächung an den Stellen der gebildeten Festkörpergelenke 7, 8 eine Frage der Optimierung.

Die erste Ausführung einer Kniehebelmanipulatoreinheit 3.1 hat den Vorteil, dass sie einen nur sehr geringen Platzbedarf hat.

Als die vorteilhafteste Ausführung für eine Kniehebelmanipulatoreinheit hat sich die dritte 3.3 erwiesen. Sie weist die höchste Feinfühligkeit und Steifigkeit auf.

### Bezugszeichenliste

- 1: feststehender äußerer Fassungsring
- 2: verstellbarer innerer Fassungsring
- 3.1: erste Ausführung einer Kniehebelmanipulatoreinheit
- 3.2: zweite Ausführung einer Kniehebelmanipulatoreinheit
- 3.3: dritte Ausführung einer Kniehebelmanipulatoreinheit
- 4.1: erstes Glied eines Kniehebels einer ersten Ausführung einer Kniehebelmanipulatoreinheit 3.1
- 4.2: erstes Glied eines Kniehebels einer zweiten Ausführung einer Kniehebelmanipulatoreinheit 3.2
- 4.3: erstes Glied eines Kniehebels einer dritten Ausführung einer Kniehebelmanipulatoreinheit 3.3
- 5.1: zweites Glied eines Kniehebels einer ersten Ausführung einer Kniehebelmanipulatoreinheit 3.1
- 5.2: zweites Glied eines Kniehebels einer zweiten Ausführung einer Kniehebelmanipulatoreinheit 3.2
- 5.3: zweites Glied eines Kniehebels einer dritten Ausführung einer Kniehebelmanipulatoreinheit 3.3
- 6.1: Kniehebelfestkörpergelenk einer ersten Ausführung einer Kniehebelmanipulatoreinheit 3.1
- 6.2: Kniehebelfestkörpergelenk einer zweiten Ausführung einer Kniehebelmanipulatoreinheit 3.2
- 6.3: Kniehebelfestkörpergelenk einer dritten Ausführung einer Kniehebelmanipulatoreinheit 3.3
- 7.1: erstes Festkörpergelenk einer ersten Ausführung einer Kniehebelmanipulatoreinheit 3.1
- 7.2: erstes Festkörpergelenk einer zweiten Ausführung einer Kniehebelmanipulatoreinheit 3.2
- 7.3: erstes Festkörpergelenk einer dritten Ausführung einer Kniehebelmanipulatoreinheit 3.3
- 8.1: zweites Festkörpergelenk einer ersten Ausführung einer Kniehebelmanipulatoreinheit 3.1
- 8.2: zweites Festkörpergelenk einer zweiten Ausführung einer Kniehebelmanipulatoreinheit 3.2
- 9.2: Hebel einer zweiten Ausführung einer Kniehebelmanipulatoreinheit 3.2
- 9.3: Hebel einer dritten Ausführung einer Kniehebelmanipulatoreinheit 3.3
- 10.3: Festeinspannung einer dritten Ausführung einer Kniehebelmanipulatoreinheit 3.3
- α: Kniewinkel
- β: Winkel
- F_{R}: radiale Kraft
- A: Fassungsachse

## Patentansprüche

1. Lateral verstellbare monolithische optische Fassung, insbesondere Linsenfassung, gefertigt aus einem rotationssymmetrischen Körper, der durch mehrere den Körper parallel zu dessen Symmetrieachse durchdringende Schlitze in einen feststehenden äußeren Fassungsring (1), mit einer Fassungsachse (A), gleich der Symmetrieachse, und einen hierzu lateral, senkrecht zur Fassungsachse (A), verstellbaren inneren Fassungsring (2) sowie drei zueinander um 120° versetzt angeordnete Manipulatoreinheiten unterteilt ist, und die Aktoren zur Manipulation der Manipulatoreinheiten aufweist,
wobei die Manipulatoreinheiten als Kniehebelgetriebe ausgebildet sind, nachfolgend Kniehebelmanipulatoreinheiten (3) genannt, **dadurch gekennzeichnet,**
**dass** die Kniehebelmanipulatoreinheiten (3)
jeweils aus einem Kniehebel bestehen, mit einem ersten Glied (4), das an einem Ende über ein Kniehebelfestkörpergelenk (6) mit einem Ende eines zweiten Gliedes (5) verbunden ist, wobei das andere Ende des ersten Gliedes (4) mit dem inneren Fassungsring (2) und das andere Ende des zweiten Gliedes (5) mit dem äußeren Fassungsring (1) in Verbindung stehen, und die Glieder (4, 5)
einen Kniewinkel (α) von größer 90°, kleiner 180° miteinander einschließen, sodass das Kniehebelfestkörpergelenk (6) in tangentialer Richtung der Fassung zwischen den beiden Verbindungen des Kniehebels mit der Fassung angeordnet ist.

2. Lateral verstellbare optische Fassung nach Anspruch 1, **dadurch gekennzeichnet,**
**dass** die Verbindungen der Glieder (4, 5) mit den Fassungsringen (1, 2) Festkörpergelenke (7, 8) sind.

3. Lateral verstellbare optische Fassung nach Anspruch 1, **dadurch gekennzeichnet,**
**dass** die Verbindungen der ersten Glieder (4) mit dem inneren Fassungsring (2) Festkörpergelenke (7) sind und die Verbindungen der zweiten Glieder (5) mit dem äußeren Fassungsring (1) als Festeinspannung (10.3) wirken.

4. Lateral verstellbare optische Fassung nach Anspruch 1, **dadurch gekennzeichnet,**
**dass** die Aktoren auf die Kniehebelfestkörpergelenke (6) gerichtet sind.

5. Lateral verstellbare optische Fassung nach Anspruch 1, **dadurch gekennzeichnet,**
**dass** die zweiten Glieder (5) starr jeweils mit einem Ende eines Hebels (9), einen festen Winkel (β) einschließend, verbunden sind und die Aktoren jeweils auf die freien Enden der Hebel (9) gerichtet sind.

## Claims

1. A laterally adjustable, monolithic optical mount, in particular a lens mount, made from a body with rotational symmetry, said body comprising a plurality of slots penetrating said body parallel to its axis of symmetry, thereby dividing said body into a stationary outer mounting ring (1), which has a mounting axis (A) that corresponds to the axis of symmetry, and into an inner mounting ring (2), which is adjustable in a lateral direction with respect to the outer mounting ring (1) and perpendicular to the mounting axis (A), as well as three manipulator units with an angular offset of 120° to one another, and which mount comprises actuators for manipulating the manipulator units,
said manipulator units being provided as toggle mechanisms, referred to as toggle manipulator units (3) below, **characterised in that**
each toggle manipulator unit (3)
consists of a toggle lever comprising a first member (4) which has one of its ends connected to one end of a second member (5) via a toggle-lever flexure hinge (6), the other end of said first member (4) being connected to the inner mounting ring (2) and the other end of said second member (5) being connected to the outer mounting ring (1), and the members (4, 5) enclosing an elbow angle (α) greater than 90° and less than 180°, so that the toggle-lever flexure hinge (6), viewed in the tangential direction of the mount, is located between the two connections of the toggle lever with the mount.

2. Laterally adjustable optical mount according to claim 1, **characterised in that** the connections of the members (4, 5) with the mounting rings (1, 2) are flexure hinges (7, 8).

3. Laterally adjustable optical mount according to claim 1, **characterised in that** the connections of the first members (4) with the inner mounting ring (2) are flexure hinges (7) and the connections of the second members (5) with the outer mounting ring (1) act as a secure clamping mechanism (10.3).

4. Laterally adjustable optical mount according to claim 1, **characterised in that** the actuators are directed towards the toggle-lever flexure hinges (6).

5. Laterally adjustable optical mount according to claim 1, **characterised in that** each second member (5) is rigidly connected to one end of a lever (9), enclosing a fixed angle (β), and the actuators are each directed towards the free ends of the levers (9).

## Revendications

1. Monture optique monolithe, notamment monture de lentille, réglable latéralement et constituée d'un corps à symétrie de rotation, ce corps étant divisé, par une pluralité de fentes le pénétrant de manière parallèle à son axe de symétrie, en un anneau de monture extérieur (1) stationnaire et présentant un axe de monture (A) qui correspond audit axe de symétrie, et en un anneau de monture intérieur (2), qui est réglable en direction latérale par rapport audit anneau de monture extérieur (1) et perpendiculaire audit axe de monture (A), ainsi que trois ensembles manipulateurs avec un écart angulaire entre eux de 120°, ladite monture comprenant des actionneurs pour la manipulation desdits ensembles manipulateurs,
ces ensembles manipulateurs étant des mécanismes à genouillère ci-dessous appelés ensembles manipulateurs à genouillère (3), ladite monture étant **caractérisée en ce que** chaque ensemble manipulateur à genouillère (3)
est constitué d'une genouillère comprenant un premier membre (4) dont une extrémité est reliée à une extrémité d'un deuxième membre (5) au moyen d'une charnière intégrale à genouillère (6), l'autre extrémité dudit premier membre (4) étant reliée audit anneau de monture intérieur (2) et l'autre extrémité dudit deuxième membre (5) étant reliée audit anneau de monture extérieur (1), et lesdits membres (4, 5)
enfermant un angle de genouillère (α) de plus de 90° et de moins de 180°, de manière que ladite charnière intégrale à genouillère (6), vue en direction tangentielle de ladite monture, soit disposée entre les deux jointures reliant ladite genouillère à ladite monture.

2. Monture optique, latéralement réglable, selon la revendication 1, **caractérisée en ce que** les jointures reliant les membres (4, 5) auxdits anneaux de monture (1, 2) sont des charnières intégrales (7, 8).

3. Monture optique, latéralement réglable, selon la revendication 1, **caractérisée en ce que** les jointures reliant lesdits premiers membres (4) audit anneau de monture intérieur (2) sont des charnières intégrales (7) et les jointures reliant lesdits deuxièmes membres (5) audit anneau de monture extérieur (1) effectuent un serrage fixe (10.3).

4. Monture optique, latéralement réglable, selon la revendication 1, **caractérisée en ce que** lesdits actionneurs sont orientés vers lesdites charnières intégrales à genouillère (6).

5. Monture optique, latéralement réglable, selon la revendication 1, **caractérisée en ce que** chaque deuxième membre (5) est relié rigidement à l'une des extrémités d'un levier (9) de manière à enfermer un angle fixe (β), et lesdits actionneurs sont chacun orientés vers les extrémités libres des leviers (9).
